# EUROPÄISCHE PATENTSCHRIFT

(11) **EP 1 238 029 B1**
(45) Veröffentlichungstag und Bekanntmachung des Hinweises auf die Patenterteilung: **14.12.2005**
(21) Anmeldenummer: 00963951.9
(22) Anmeldetag: 01.09.2000
(51) Int. Cl.: C09D 183/04, C09D 185/00, C09D 201/00, C09D 183/08, C08G 77/24

(54) **VERFAHREN UND STOFFE**
METHODS AND MATERIALS
PROCEDE ET MATIERES

(30) Priorität: 02.09.1999 DE 19941753
(43) Veröffentlichungstag der Anmeldung: 11.09.2002
(73) Patentinhaber: Nanogate Coating Systems GmbH, 66121 Saarbrücken (DE)
(72) Erfinder: JONSCHKER, Gerhard, 66583 Spiesen-Elversberg (DE); BENTHIEN, Thomas, 66125 Saarbrücken (DE)
(74) Vertreter: von Kreisler, Alek
(86) Internationale Anmeldenummer: PCT/DE2000/002984
(87) Internationale Veröffentlichungsnummer: WO 2001/018135

(56) Entgegenhaltungen:
- EP-A- 0 293 963
- EP-A- 0 799 873
- WO-A-95/23804
- WO-A-99/19084
- WO-A-99/29636
- US-A- 5 274 159
- US-A- 5 629 400
- PATENT ABSTRACTS OF JAPAN vol. 017, no. 700 (C-1145), 21. Dezember 1993 (1993-12-21) & JP 05 237442 A (IDEMITSU KOSAN CO LTD), 17. September 1993 (1993-09-17)
- PATENT ABSTRACTS OF JAPAN vol. 015, no. 141 (C-0822), 10. April 1991 (1991-04-10) & JP 03 023227 A (IDEMITSU KOSAN CO LTD), 31. Januar 1991 (1991-01-31)

## Beschreibung

Die vorliegende Erfindung befasst sich mit Beschichtungsmaterialien.

Ein erster, vorliegend wichtiger Stoff ist ein Antihaftmaterial. Antihaftmaterialien sind in jüngster Zeit insbesondere im Bereich sanitärer Keramik (Waschbecken, Toilettenbecken usw.) eingesetzt worden. Es ist per se wünschenswert, derartige Beschichtungen schnell und einfach auftragen bzw. fertigen zu können und sie abriebsfest zu gestalten.

Eine einfache Auftragung kann unter anderem realisiert werden, wenn das Beschichtungsmaterial mit einem wässrigen Fluid anstelle von oft giftigen organischen Lösungsmitteln verwendet wird. Dies erhöht die Umweltverträglichkeit, senkt also die Anforderungen, die an die Beschichtungsunternehmen aus Umweltschutzgründen gestellt werden.

Bekannt sind nun Beschichtungen aus fluorierten Alkoxysilanen, die wenigstens eine hydrophile Gruppe aufweisen, vgl. US PS 5274159 (Pellerite et al.). Die dort eingesetzten Silane sind mit Polyethylenglykol (PEG) modifiziert und durch ihre hydrophile Komponente wasserdispergierbar, obwohl der eigentlich für die Beschichtung relevante fluorierte Molekülbereich hydrophob ist. Wenn ein derartiges Material auf eine zu beschichtende Keramik oder einen anderen zu beschichtenden Körper aufgebracht ist, muss er nachfolgend eingebrannt werden. Dabei zersetzt sich der thermisch labilere Polyethylenglykol- Rest und es verbleibt die hydrophobe Beschichtung. Die zur Zersetzung insbesondere von Polyethylenglykol erforderlichen Temperaturen sind aber, insbesondere für viele Nicht-Keramik-Anwendungen, unerwünscht hoch und es muss beim Brennen eine große Substanzmenge entfernt werden. Dies kann zu unerwünschten Materialverfärbungen und Verkohlungen führen. Oft sind die Substanzen nicht vollständig stabil, sondern zersetzen sich allmählich, was zu schwer zu verarbeitenden öligen Ausscheidungen führt, wobei die Zersetzung abhängig vom pH-Wert der Lösung innerhalb von wenigen Minuten bis maximal einigen Tagen vollständig ablaufen kann, wobei aber die teilweise Zersetzung die Verarbeitbarkeit bereits drastisch beschränkt.

Es ist gleichfalls bekannt, dass Silane durch Einstellen eines pH-Wertes im leicht sauren Bereich in Wasser zu stabilisieren sind. Ausgenutzt wird die Reaktionsträgheit der Si-O-Si-Vernetzung am isoelektrischen Punkt, d.h. typisch bei einem pH-Wert um zwei bis drei. Die Anwendung dieser Stabilisationsmethode für fluormodifizierte Silane schlägt in der Regel deshalb fehl, weil die extrem wasserabweisenden fluorierten Gruppen zu einer raschen Agglomeration führen und damit lediglich extrem verdünnte Lösungen mit deutlich unter 1 % Feststoffgehalt und nur für kurze Zeit stabilisierbar sind. Damit sind derartige Systeme zur Herstellung homogener Oberflächenbeschichtungen nur schlecht geeignet, da sie sich infolge der Antihaftwirkung der Fluorsilane sehr schnell zu Tropfen zusammenziehen um die sich ausbildende Beschichtung das weitere Beschichtungsmaterial bereits abstößt. Dieser Effekt ist als Autophobie bekannt und führt zu nur dünnen Beschichtungen, mit negativen Folgen vor allem für die Abriebsfestigkeit.

Weiter sind silanolstabilisierte perfluorierte Systeme zur Herstellung homogener Oberflächenbeschichtungen nur schlecht geeignet, da sie sich in Folge der Antihaftwirkung der Fluorsilane sehr schnell zu Tropfen zusammenziehen und die sich ausbildende Beschichtung das weitere Beschichtungs-Material bereits abstößt. Dieser Effekt ist als Autophobie bekannt und führt zu nur dünnen Beschichtungen, mit negativen Folgen vor allem für die Abriebsfestigkeit.

Auch Fluoralkylsilan-Beschichtungssysteme auf Wasserbasis, die mit großen Mengen an Alkalihydroxyd(en) versetzt wurden, weisen den Autophobie-Effekt samt dessen Nachteilen auf.

WO 95/23804 A1 beschreibt Emulsionen aus hydrolysierten Silanen und deren Verwendung als Beschichtung.

WO 99/29636 A1 beschreibt Hydrolysate von Fluorkohlenwasserstoffen, deren Emulsionen und damit beschichtete Gegenstände.

Die Aufgabe der vorliegenden Erfindung besteht darin, die Nachteile des Standes der Technik zu überwinden.

Diese Aufgabe wird in einer ersten Ausführungsform gelöst durch ein Beschichtungsmaterial auf Wasserbasis dadurch gekennzeichnet, dass es mindestens folgende Bestandteile enthält:
a) eine quartäre Ammoniumverbindung, die ausgewählt ist aus der Gruppe Betaine, N⁺(CH₃)₃-CH₂-COOH, N⁺(CH₃)₄OH⁻, N⁺(C₂H₅)₄OH⁻, die eine positive Ladung trägt, und
b) ein mindestens teilfluoriertes, vernetzbares Alkylsilan, das mit der Verbindung aus a) ein Ionenpaar ausbildet.

Es wird nun vorliegend und erfindungsgemäß vorgeschlagen, teilfluorierte vernetzbare Alkylsilane durch kleine, thermisch labile oder flüchtige und/oder organische Moleküle, nämlich definierte quartäre Ammoniumverbindungen in der Wasserphase zu stabilisieren.

Wichtig ist, dass das Alkylsilan mit der quartären Ammoniumverbindung ein Ionenpaar ausbildet. Dabei bezieht sich der Begriff "Paar" auf die Paarung von Ionen, nicht aber nur zwingend auf das exakte Vorhandensein von genau einem positiven und einem negativen Ion. Es liegt also erfindungsgemäß eine stark polare Bindung vor. Das Ionenpaar beziehungsweise polare Bindungspaar besitzt dabei einen stark hydrophilen Charakter. Das ganze führt zu einer Tensidstruktur bzw. tensidartigen Struktur, die sowohl eine hohe Wasserlöslichkeit bedingt als auch eine gute Benetzung von Untergründen ergibt.

Die Umsetzung der dafür erforderlichen Ausgangsmaterialien kann in der Wasserphase erfolgen, was aber nicht zwingend ist. Es ist im übrigen möglich, eine Lösung des bzw. der beschriebenen Stoffe als Dispergier- und/oder Emulgierhilfe zu nutzen, z.B. um kleine Teflonpartikel unter Verwendung dieser Lösung aufzutragen.

Die Ionenpaarbildung erfolgt typisch in der wässrigen Phase; da vor Bildung des Ionenpaares die Wasser-Löslichkeit der Alkylsilane gering ist, kann bei der Umsetzung eine geringe Menge eines Lösungsvermittlers zugegeben werden. Allerdings ist es auch denkbar, eine Feststoffumsetzung mit nachfolgender Auflösung in Wasser vorzunehmen.

Es ist besonders bevorzugt, wenn die Reaktionsbedingungen und/oder die Ausgangssubstanzen so gewählt sind, dass eine zumindest partielle Vernetzung der Alkylsilane Moleküle vor der Auftragung auf dem zu beschichtenden Körper erfolgen kann. Dies führt in der fertigen Schicht und nach thermischer Verdichtung wie erforderlich zu einem hochmolekularen Polymer, das dreidimensional vernetzt und unlöslich ist. Ein besonders bevorzugtes Beispiel hierzu ergibt sich, wenn Fluoralkylsilane mit einer quartären Ammoniumverbindung umgesetzt werden, wobei durch den alkalischen pH-Wert eine schnelle und weitgehende Kondensation der Silanmoleküle bereits in der Flüssigphase stattfindet. Beim thermischen Verdichten unter Zersetzung bzw. Entfernung des quartären Ammoniumions können dann die frei werdenden Silanolgruppen weiter vernetzen und das gewünschte dreidimensionale Netzwerk aufbauen.

Die erhaltene Lösung ist demnach als Beschichtungslösung, als Emulgierhilfe und auch als Tensid einsetzbar. Nach thermischer Verdichtung auf einem Körper ergibt sich eine Beschichtung, die insbesondere Antihaft-Eigenschaften aufweist.

Die quartären Ammoniumverbindungen sind nach der Auftragung der wässrigen Lösung auf einen Körper leicht und rückstandsfrei zu entfernen.

Das dabei auf dem Körper zurückbleibende Material hat eine ausgezeichnete Antihaftwirkung gegen Wasser und Öl. Dank seiner hohen Vernetzung und der guten Benetzung von Untergründen, die zu dicken Schichten führt, ist die Abriebsfestigkeit hoch. In einem praktischen Ausführungsbeispiel mit Fluoralkylsilanen und mit quartären Ammoniumverbindungen erwies sich eine erzeugte Beschichtung als transparent, farblos, hatte sehr gute Haftung auf Metall und Keramik und der beschichtete Körper war leicht zu reinigen. Der sich bei Benetzung ergebende Kontaktwinkel gegen Wasser lag über 90° .

Als per- bzw. teilfluorierte Alkylsilane kommen besonders in Betracht Moleküle des Aufbaus

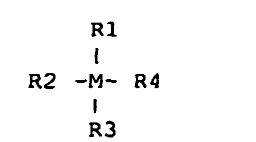

Als M kommt Si in Betracht, insbesondere insoweit als sie jeweils hydrolysierbare und/oder wasserlösliche Verbindungen ergeben.

Obwohl andere hydrophobe Gruppen vorhanden sein können, ist es bevorzugt, wenn es sich bei R1 insbesondere handelt um per- bzw. teilfluorierte Alkyle, per- bzw. teilfluorierte Cycloalkyle und/oder per- bzw. teilfluorierte Aryle. Die Fluoratome sind insbesondere durch ein, insbesondere im Falle von Si als M-Atom wenigstens 2 C-Atome langes Zwischenstück vom M getrennt; typisch sind (CH₂)₂-Spacer
R2 bis R4 können identisch oder verschieden sein. Es kann sich insbesondere handeln z.B. um -OH; -O-Alkyl; -O-Cycloalkyl; -O-Aryl, -Cl, -Acetoxy, -Oxim. Es können dabei an den O-R-Resten zusätzliche funktionelle Gruppen vorhanden sein, z.B. OH; Cl; NH₂. Es können weiter als R2 bis R4 Alkyl-, Aryl- und/oder Cycloalkylreste vorhanden sein, auch diese evtl. mit zusätzlichen funktionellen Gruppen.

Es können sich insbesondere -O-SiR₁R₂R₃ Strukturen als Polykondensate ergeben.

Als Gegenion zu den quartären Ammoniumverbindungen kommen insbesondere in Betracht OH⁻, Cl⁻, Br⁻, SO²⁻ usw.

Quartäre Ammoniumverbindungen bewirken aufgrund des Vorhandenseins einer positiven Ladung in wässriger Lösung die Ionenpaarbildung. Auch zersetzen sich quartäre Ammoniumverbindungen bereits bei ca. 160 °C zu flüchtigen, aus der Schicht entweichenden Komponenten.

Als quartäre Ammoniumverbindung kommen N(CH₃)₃-CH₂-COOH, N(CH₃)₄OH oder N(C₂H₅)₄OH in Frage. Bei diesen kurzen organischen Molekülresten an der quartären Ammoniumverbindung ist eine sterische Behinderung der erwünschten, zumindest partiellen Vernetzung der mindestens teilfluorierten, vernetzbaren Alkylsilane vor deren Auftragung auf dem zu beschichtenden Körper gering, und überdies wird die zu entfernende Menge organischer Substanzen geringer, wenn die organischen Reste kürzer sind. Dadurch steigt die Molmasse des sich vernetzenden Polymers.

Gegebenenfalls ist es bevorzugt, noch zusätzlich andere, gegebenenfalls nicht thermisch labile Ionenpaarbildner beizugeben. Ursächlich hierfür ist der hohe Preis der quartären Verbindungen und der umstand, dass bei ihrer Zersetzung eine störende Geruchsentwicklung erfolgt. Geeignet sind als nicht thermisch labile Ionenpaarbildner insbesondere Alkali-Ionen, vor allem Lithium und Kalium. Auch Erdalkali-Ionen sind einsetzbar. Weiter sind NH₄⁺-Ionen einsetzbar.

Es sei erwähnt, dass die Einstellung der Verhältnisse von Substanzen aus teilfluorierten, vernetzbaren Alkylsilanen zu quartären Ammoniumverbindungen nicht zwingend stöchiometrisch sein muss. Da die Alkylsilane typisch vernetzen werden und/oder vernetzen sollen, reicht es für die Erzielung einer Wasserlöslichkeit aus, nur mit einigen der Alkylsilane das Ionenpaar zu bilden und damit die daran vernetzten bzw. kondensierten anderen Alkylsilane ohne Ionenpaarpartner gleichfalls in wässriger Lösung zu halten.

Die Konzentration der quartären Ammoniumverbindungen bestimmt allerdings, wie weitgehend die großen Moleküle miteinander vernetzen. Eine geringe Konzentration an quartären Ammoniumionen führt zu einer weitergehende Vernetzung, ebenso wie eine geringere sterische Hinderung, etwa durch kürzere organische Reste am quartären Ammoniumion, so dass in beiden Fällen die Molmasse des Polymers steigt.

Es werden bevorzugt Verhältnisse von 1:5 bis 50:1 bezogen auf Mol Silane zu Mol quartärer Ammoniumionen mit der vorliegenden Erfindung verwendet. Werden zuviel Ammoniumionen beigegeben, ist also der Anteil der quartären Ammoniumverbindung zu hoch, so muss zuviel organische Substanz aus der Schicht herausgebrannt werden. Ist der Anteil der quartären Ammoniumverbindung zu niedrig, kann es zum Ausflocken bzw. Ausfallen der fluorierten Si-Verbindung kommen, d.h. dass die Alkylsilane insbesondere nach deren Vernetzung nicht mehr in der Lösung verbleiben.

Es ist bevorzugt, wenn der Gesamtgehalt organischer Bestandteile, die thermisch aus der Beschichtung entfernt werden müssen, nur gering ist. Er wird in der Regel bei unter 15% liegen, da sich sonst die Materialausbeute verringert. Es können sogar unter 5% verwendet werden.

Es sei erwähnt, dass bei Verwendung von Fluoralkylsilanen oder anderen fluorierten Silanen es möglich ist, auch andere Silane beizugeben, um die Beschichtungseigenschaften auf eine bestimmte Anwendung hin zu optimieren, etwa zur Veränderung der Haptik (der "Griffigkeit") der Oberfläche, des Grades an Wasser- und Ölabweisung usw. So wurden in einem praktischen Ausführungsbeispiel bis zu 40 Mol-% Dimethylsilan verwendet, was die Chemikalienbeständigkeit der fertigen Beschichtung gegen bestimmte Substanzen verbessert hat. Andere ohne weiteres zusetzbare Silane sind Methylsilane und/oder Phenylsilane als Filmbildner und/oder härtegebende Substanzen. Es sei erwähnt, dass als Zusatz und Hilfsstoffe insbesondere solche zugesetzt werden können, die als Verlaufmittel, Lösungsmittel, allgemeines Lackadditiv, Rheologieadditiv und/oder als Pigmente und/oder Farbstoffe dienen. Bevorzugte Zusatzmittel sind Netzmittel und Fluortenside sowie zu emulgierende fluorierte Polymere, z.B. PTFE (Teflon). Die Fluortenside verbessern die Applizierbarkeit, sind jedoch teuer. Mischungen mit bis zu 30% Fluortensiden ergaben gute Resultate bei der Beschichtung. Die zu dispergierenden fluorierten Polymere werden vorteilhaft beispielsweise bei porösen Materialien, wie Ziegeln, nicht-glasierter Keramik, Beton usw. eingesetzt, wo sei einerseits die Abriebsfestigkeit der erfindungsgemäßen Beschichtungsstoffe weiter erhöhen und andererseits zugleich die UV-Beständigkeit verbessern. Es ist auch möglich, durch die dispergierten fluorierten Polymere eine quasi stochastische Strukturierung zu erhalten, was zu einer schmutzabweisenden, insbesondere zumindest näherungsweise selbstreinigenden Oberfläche führt. Alternativ und/oder zusätzlich sind andere Zusatzstoffe zur Erzielung einer quasi stochastischen Struktur zusetzbar, insbesondere pyrogene Kieselsäuren, dispergierte Schichtsilikate u.a.. Es ist möglich, einen Gehalt an dispergierten fluorierten Polymeren oder anderen Zusatzstoffen von beispielsweise bis zu 50 Gewichtsprozent zu verwenden. Dabei können z.B. bis zu 30% Zusatz- und Hilfsmittelstoffe bezogen auf den Feststoffgehalt eingesetzt werden.

Während die wasserlöslichen Beschichtungsstoffe besonders im Bereich fluorierter Substanzen, insbesondere von Fluoralkylsilane wichtig sind, ist es möglich, das beschrieben Prinzip auch für andere Zwecke und/ oder andere fluorierte Substanzen einzusetzen, etwa zur Erzielung eines guten Korrosionsschutzes.

Die thermische Zersetzung kann insbesondere bei quartären Ammoniumverbindungen bei Temperaturen bis herunter zu etwa 160°C erfolgen. Bevorzugt ist aber eine Temperatur von ca. 250°C für einige Minuten bis Stunden. Ist der zu beschichtende Körper temperaturempfindlich, ist als thermische Behandlung auch ein Halten auf Raumtemperatur möglich, mit allerdings schlechteren Ergebnissen für die Abriebsfestigkeit.

Die Erfindung wird im folgenden anhand eines Beispiels beschrieben:

Bei -Raumtemperatur werden in einem Rührgefäß 51 g 1H,1H,2H,2H-Tridekafluoroktyltriethoxysilan vorgelegt und mit 36,4 g einer Lösung von Tetramethylammoniumhydroxyd (25 Gew.-%) versetzt. Als Lösungsvermittler kommen 4 g Isopropanol hinzu. Als Tensid werden zusätzlich 0,7 g Perfluoroktansäure zugegeben. Die Mischung wird unter intensiven Rühren emulgiert, bis eine Erwärmung auf ca. 40 °C stattgefunden hat. Zu diesem Zeitpunkt wird die Mischung einphasig und klar. Nach einstündiger Alterung des Reaktionsgemisches wird 700 g Wasser portionsweise unter gutem Rühren zugegeben. Es entsteht eine wasserklare Lösung, die sofort zu Beschichtungszwecken eingesetzt werden kann.

Zum Auftragen der Beschichtung wird ein fusselfreies Baumwolltuch benutzt. Glasplatten, Keramik und emaillierter Stahl werden mit der Lösung eingerieben, bis ein gleichmäßiger dünner Film des Beschichtungsmaterials auf der Oberfläche sichtbar ist. Nach der Antrocknung bei Raumtemperatur werden die beschichteten Teile in einem Elektroofen für 1 Stunde auf 260 °C erwärmt. Nach dem Abkühlen ist mit bloßem Auge keine Beschichtung sichtbar, Wasser und Öl perlen aber von den beschichteten Gegenständen ab. Der Kontaktwinkel gegen Wasser beträgt 92°, gegen Speiseöl 65°. Die Abriebbeständigkeit des Beschichtungsmaterials wird durch Abreiben mit handelsüblicher Scheuermilch (Marke TARNA) getestet. Ein mit 500 g Gewicht versehender Maurerschwamm wird mit der Scheuermilch getränkt und 400 x über die beschichtete Oberfläche geführt. Nach dieser Behandlung beträgt der Kontaktwinkel gegen Wasser noch 82°, der Kontaktwinkel gegen Speiseöl noch 60°.

Der Mechanismus, warum das Verfahren der vorliegenden Erfindung so hervorragende Resultate liefert, ist noch nicht vollständig wissenschaftlich untersucht. Es wird aber angenommen, dass die Reaktionen wie folgt verlaufen:

Zunächst bildet sich aus dem 1H,1H,2H,2H-Tridekafluoroktyltriethoxysilan mit dem Tetramethylammoniumhydroxyd unter Vorhandensein von Wasser das Ionenpaar wie folgt:

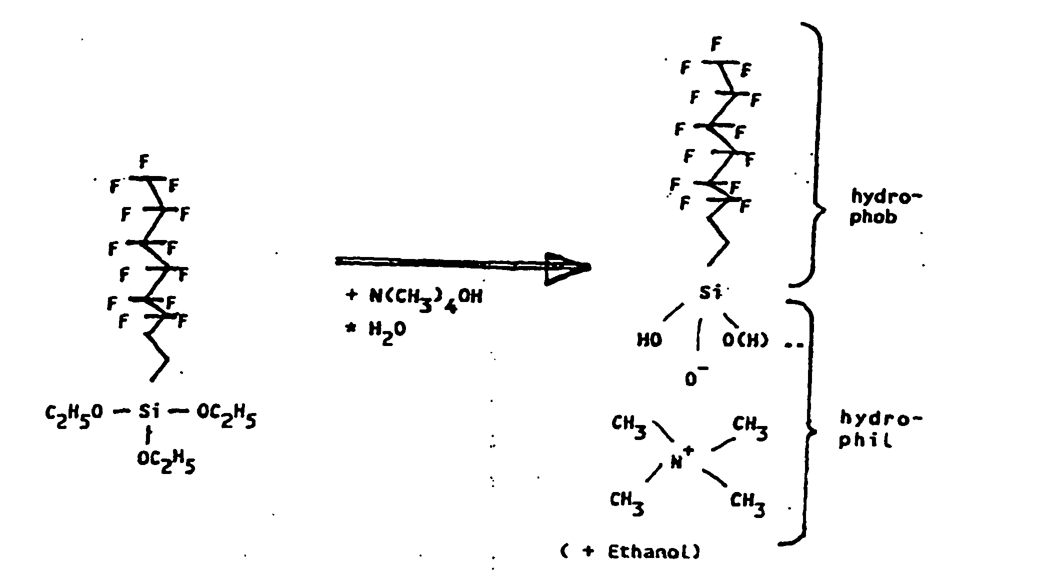

Man hat also eine Anordnung, die ein hydrophobes Ende aufweist und ein durch das Ionenpaar hydrophiles Ende.

Viele dieser Strukturen kondensieren dann, und zwar wird vermutet, dass dies unter Micellenbildung geschieht. Es wird vermutet, dass dieser Vorgang bei der einstündigen Alterung abläuft. Man hat dann folgende Strukturen:

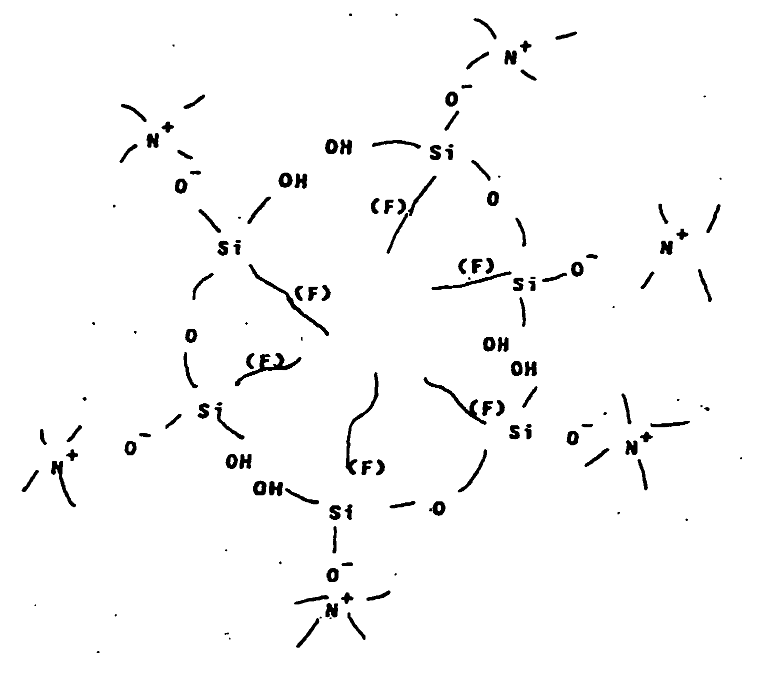

Hier liegen die quartären Ammoniumstrukturen außen, die andernfalls zur Autophobie führenden fluorierten Reste liegen innen in der Micelle.

Werden diese Micellen nun auf einen Körper aufgetragen, können sich dicke Schichten bilden. Aus diesen Schichten werden die quartären Ammoniumionen durch Erwärmen entfernt, worauf sich die dadurch freien Enden der verbleibenden Strukturen weiter vernetzen können:

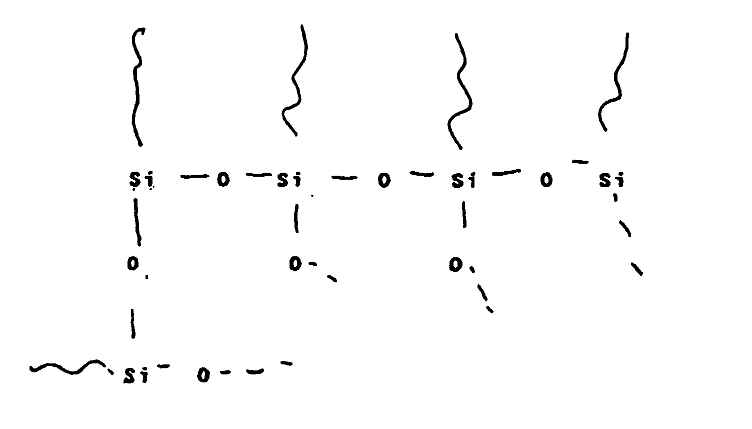

In einem weiteren Beispiel wird umgesetzt 0,8 mol F(CF₂)₅(CH₂)₂Si(OC₂H₅)₃ und 0,2 mol (H₅C₂O)-Si(CH₃)₂-(OC₂H₅) umgesetzt mit 1 mol N(CH₃)₄ unter Bildung eines Heteropolysiloxans der Art 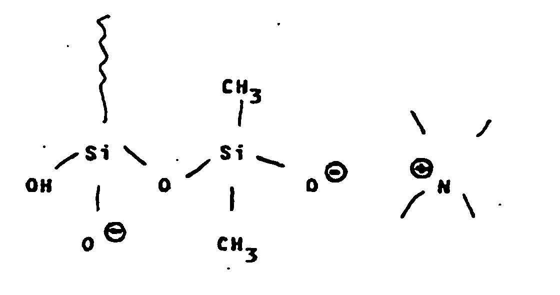 und zwar in 25%iger wässriger Lösung

Auch die sich hier ergebende Substanz ist gut für Beschichtungen geeignet und der Vernetzungsgrad erweist sich als abhängig von der Konzentration an N(CH₃)₄.

Es sei erwähnt, dass die Emulgierbarkeit von Teflon und dergl. insbesondere auf dem Einschluss in die Micellen beruhen könnte.

## Patentansprüche

1. Beschichtungsmaterial auf Wasserbasis **dadurch gekennzeichnet, dass** es mindestens folgende Bestandteile enthält:
a) eine quartäre Ammoniumverbindung, die ausgewählt ist aus der Gruppe Betaine, N⁺(CH₃)₃-CH₂-COOH, N⁺(CH₃)₄OH⁻, N⁺(C₂H₅)₄OH⁻, die eine positive Ladung trägt, und
b) ein mindestens teilfluoriertes, vernetzbares Alkylsilan, das mit der Verbindung aus a) ein Ionenpaar ausbildet.

2. Beschichtungsmaterial nach Anspruch 1 **dadurch gekennzeichnet, dass** das Stoffmengen Verhältnis der Verbindung aus b) zur Verbindung aus a) in einem Bereich von 1:5 bis 50:1 liegt.

3. Beschichtungsmaterial nach einem der Ansprüche 1 oder 2 **dadurch gekennzeichnet, dass** das Gegenion der quartären Ammoniumverbindung ausgewählt ist aus der Gruppe OH⁻, Cl⁻, Br⁻, SO₄²⁻.

4. Beschichtungsmaterial nach einem der Ansprüche 1 oder 2 **dadurch gekennzeichnet, dass** die Verbindung aus b) der allgemeinen Formel SiR¹R²R³R⁴ entspricht, in der R¹ ein mindestens teilfluorierter Alkylrest ist und R² bis R⁴ aus der Gruppe -O-Alkyl, O-Cycloalkyl, -O-Aryl, -Cl, -Acetoxy ausgewählt ist, insbesondere dass in R¹ die Fluoratome vom Si-Atom mindestens durch eine -(CH₂)₂-Gruppe getrennt sind.

5. Beschichtungsmaterial nach einem der Ansprüche 1 bis 4 **dadurch gekennzeichnet, dass** die Wasserbasis weniger als 10 Vol.% Alkohol enthält.

6. Beschichtungsmaterial nach einem der Ansprüche 1 bis 6 **dadurch gekennzeichnet, dass** die Verbindung aus b) Tridekafluoroktyltriethoxysilan ist.

## Claims

1. Water-based coating material, **characterized by** containing at least the following components:
a) a quaternary ammonium compound selected from the group of betaines, N⁺(CH₃)₃-CH₂-COOH, N⁺(CH₃)₄OH⁻, N⁺(C₂H₅)₄OH⁻, and bearing a positive charge; and
b) an at least partially fluorinated cross-linkable alkylsilane which forms an ion pair with the compound of a).

2. The coating material according to claim 1, **characterized in that** the molar ratio of the compound of b) to the compound of a) is within a range of from 1:5 to 50:1.

3. The coating material according to either of claims 1 or 2, **characterized in that** the counter ion of said quaternary ammonium compound is selected from the group of OH⁻, Cl⁻, Br⁻, SO₄²⁻.

4. The coating material according to either of claims 1 or 2, **characterized in that** the compound of b) corresponds to the general formula SiR¹R²R³R⁴ in which R¹ is an at least partially fluorinated alkyl residue and R² to R⁴ are selected from the group of -O-alkyl, -O-cycloalkyl, -O-aryl, -Cl, -acetoxy, especially **in that** the fluorine atoms in R¹ are separated from the Si atom by at least one -(CH₂)₂- group.

5. The coating material according to any of claims 1 to 4, **characterized in that** the water base contains less than 10% by volume of alcohol.

6. The coating material according to any of claims 1 to 5, **characterized in that** the compound of b) is tridecafluorooctyltriethoxysilane.

## Revendications

1. Enduit à base d'eau, **caractérisé en ce qu'**il contient au moins les constituants suivants :
a) un composé d'ammonium quaternaire, qui est choisi dans l'ensemble formé par les bétaïnes et les composés de formules N⁺(CH₃)₃-CH₂-COOH, N⁺(CH₃)₄OH⁻ et N⁺(C₂H₅)₄OH⁻, et qui est porteur d'une charge positive,
b) et un alkylsilane réticulable, au moins partiellement fluoré, qui forme avec le composé (a) une paire d'ions.

2. Enduit conforme à la revendication 1, **caractérisé en ce que** le rapport de la quantité de composé (b) à la quantité de composé (a) vaut de 1/5 à 50/1.

3. Enduit conforme à la revendication 1 ou 2, **caractérisé en ce que** le contre-ion du composé d'ammonium quaternaire est choisi dans l'ensemble formé par les ions OH⁻, Cl⁻, Br⁻ et SO₄²⁻.

4. Enduit conforme à la revendication 1 ou 2, **caractérisé en ce que** le composé (b) a pour formule générale SiR¹R²R³R⁴ dans laquelle R¹ représente un groupe alkyle au moins partiellement fluoré et les symboles R² à R⁴ représentent des entités choisies parmi les atomes de chlore et les groupes alcoxy, cycloalcoxy, aryloxy et acétoxy, et en particulier **en ce que**, dans le groupe représenté par R¹, les atomes de fluor sont séparés de l'atome de silicium au moins par un groupe de formule -(CH₂)₂-.

5. Enduit conforme à l'une des revendications 1 à 4, **caractérisé en ce que** l'eau de base contient moins de 10 % en volume d'alcool.

6. Enduit conforme à l'une des revendications 1 à 5, **caractérisé en ce que** le composé (b) est du tridécafluorooctyl-triéthoxysilane.
